# EUROPÄISCHE PATENTSCHRIFT

(11) **EP 1 032 891 B1**
(45) Veröffentlichungstag und Bekanntmachung des Hinweises auf die Patenterteilung: **06.04.2005**
(21) Anmeldenummer: 98964357.2
(22) Anmeldetag: 13.11.1998
(51) Int. Cl.: G06F 17/00

(54) **VERFAHREN UND EINRICHTUNG ZUR DETEKTION UND KOINZIDENZBRINGUNG ABSCHNITTSWEISE IN MONOTONE UND STETIGE TRAJEKTORIEN WANDELBARER SIGNALFORMEN**
METHOD AND DEVICE FOR DETECTING AND MAKING SIGNAL SHAPES COINCIDENTAL, SAID SHAPES BEING CONVERTIBLE INTO MONOTONE AND CONSTANT TRAJECTORIES IN A SECTION BY SECTION MANNER
PROCEDE ET DISPOSITIF POUR DETECTER ET METTRE EN COINCIDENCE DES FORMES DE SIGNAL CONVERTIBLES PAR SECTIONS EN TRAJECTOIRES MONOTONES ET CONSTANTES

(30) Priorität: 17.11.1997 DE 19750835
(43) Veröffentlichungstag der Anmeldung: 06.09.2000
(73) Patentinhaber: Klefenz, Frank, 68161 Mannheim (DE)
(72) Erfinder: Klefenz, Frank, 68161 Mannheim (DE)
(74) Vertreter: Olbricht, Karl Heinrich, Dipl.-Phys.
(86) Internationale Anmeldenummer: PCT/DE1998/003339
(87) Internationale Veröffentlichungsnummer: WO 1999/026167

(56) Entgegenhaltungen:
- US-A- 5 417 113
- LAZZARO ET AL: "Silicon Auditory Processors as Computer Peripherals" IEEE TRANSACTIONS ON NEURAL NETWORKS, Bd. 4, Nr. 3, Mai 1993 (1993-05), Seiten 523-527, XP000361828 New York, US
- MEAD ET AL: "Analog VLSI Model of Binaural Hearing" IEEE TRANSACTIONS ON NEURAL NETWORKS, Bd. 2, Nr. 2, März 1991 (1991-03), Seiten 230-236, XP000202574 New York , US

## Beschreibung

### Stand der Technik

Die Erfindung bezieht sich auf ein Verfahren und eine Einrichtung zur Detektion und Koinzidenzbringung abschnittsweise in monotone und stetige Trajektorien wandelbarer Signalformen, insbesondere zur Echtzeitmustererkennung, Ortung und Verfolgung optischer und akustischer Signale und zur Laufzeitdifferenzenbestimmung. Dabei werden die Signale eingangsseitig zeitdiskret abgetastet, die Signale durch Korrelation detektiert und nachfolgend durch eine Koinzidenzschaltung Signallaufzeiten von Signalkombinationspaaren unterschiedlicher Laufzeit und unterschiedlicher Signalform bestimmt.
Die Erfindung bezieht sich weiterhin auf eine Einrichtung zur Durchführung eines solchen Verfahrens.

Eine Verfahrensweise der vorgenannten Art zur Signaldetektion beruht auf dem klassischen Template-Matching, bei der das Eingangssignal mit einem vorgespeicherten Referenzsignal korreliert wird. Durch die zeitdiskrete Abtastung ist das Signal durch eine Folge von Eingabevektoren gegeben, die ein Raster bilden, in dem das Signal durch Angabe aller Rasterpixelpositionen gegeben ist. Im Raster ist die Korrelation durch Abzählen der übereinstimmenden Pixelpositionen zwischen Eingangs- und Referenzsignal gegeben. Eine Variante dieser Verfahrensweise ist das zeitsequentielle Template-Matching, wobei pro Zeitschritt jeweils ein Eingabevektor mit dem Suchvektor korreliert wird und die Teilergebnisse zwischengespeichert und nach n Zeitschritten zu einem Gesamtkorrelationsergebnis zusammengezählt werden.
Das zeitsequentielle Template-Matching wird zu einem parallelen Multi-Template-Verfahren mit n Suchmuster erweitert, indem die Korrelationseinheit n-fach repliziert und n Korrelationseinheiten nebeneinander angeordnet werden. Die Eingabevektoren durchlaufen die Korrelationseinheiten und in jeder Korrelationseinheit wird die Korrelation eines Eingabevektors mit dem Vergleichsvektor durchgeführt.

Eine translationsinvariante parallele Multi-Template Matching-Verfahrensweise ist bekannt aus "Lazzaro, J., Mead, C. (1989). A silicon model of auditory localization. Neural Computation 1: Seiten 47 - 57". Dort erfolgt die Laufzeitdifferenzenbestimmung von akustischen Signalen in zwei gekoppelten Funktionseinheiten, einer analogen Silicon Cochlea, die die Eigenschaften einer Cochlea in biologischen Systemen nachbildet und einer nachgeschalteten Korrelationseinheit. Die Silicon Cochlea empfängt eingangsseitig Signale, die die Silicon Cochlea in einen Anregungszustand versetzen. Je nach Anregungssignal werden äquidistant längs der Cochlea angebrachte Meßfühler aktiviert, die Normpulse an die nachgeschaltete Korrelationseinheit weiterleiten. Die Einrichtung ist paarig aufgebaut und die Normpulse, die von der rechten bzw. linken Silicon Cochlea stammen, durchlaufen eine antiparallel geführte Korrelationseinheit, bestehend aus zwei Sätzen von antiparallel geführten Verzögerungsstrecken, wobei jeweils die Verzögerungsstrecken zur gleichen Meßfühlerposition paarweise zusammengefaßt sind. Äquidistant längs der paarweisen Verzögerungsstrecken sind UND-Gatter angebracht, die den Signalzustand der Verzögerungsleitungen abgreifen und bei Koinzidenz ausgelöst durch zeitgleich eintreffende Normpulse am UND-Gatter ein Koinzidenzsignal am Gatterausgang hervorrufen. In der Korrelationseinheit werden die Koinzidenzen der Normpulse für jedes Leitungspaar bestimmt und die Anzahl der Koinzidenzen längs der gleichen Positionierung der UND-Gatter in Richtung der Verzögerungsleitungen abgezählt. Ausgegeben wird pro Zeitschritt ein Vektor von Signallaufzeitdifferenzen. Die bekannte Verfahrensweise beruht also auf der Nachbildung einer Cochlea und der Bestimmung von Koinzidenzen längs analogen Verzögerungsstrecken.

Aus US-A-5 417113 ist ausserdem ein Verfahren bekannt, das die Lokalisierung von Schallquellen mittels Auswertung der durch mehrere Silicon Cochlea gewonnenen Meßdaten erlaubt.

Die Mikrofonsignale werden paarweise mehreren Silicon Cochlea zugeführt, die jeweils eine zweidimensionale Korrelation entlang vorbestimmter Verzögerungsstrecken ausführt. Die detektierten Koinzidenzen werden von den jeweiligen Silicon Cochlea einer nachgeschalteten 3-D Auswerteeinheit zugeführt, die durch Vergleich der charakteristischen Signaturen in den 2-D Ausgangsdaten eine verbesserte Lokalisierung der Schallquelle ermöglicht.

### Nachteile des Standes der Technik

Die klassischen Template-Matching-Verfahren haben den Nachteil, daß das Template-Matching nicht invariant gegenüber einer räumlichen Verschiebung ist. Nur ein Signalverlauf, der zum gleichen Synchronisationszeitpunkt vorliegt, bei dem die Korrelation des Eingabe- mit dem Vergleichsvektor gestartet wird, ergibt ein maximales Korrelationsergebnis. Wird die Korrelation des Eingangsvektoren mit den Vergleichsvektoren um ein oder mehrere Folgen verschoben, stimmen Bildmuster und Suchmuster nicht mehr überein.
Ein Nachteil des bekannten translationsinvarianten parallelen Multi-Template-Matching-Verfahrens zur Laufzeitdifferenzenbestimmung akustischer Signale ist die komplexe Nachbildung einer biologischen Cochlea, insbesonders die Abstimmung des Antwortverhaltens der Cochlea in Bezug auf unterschiedliche Anregungssignale durch Variation der relevanten die Cochlea beschreibenden Parameter.
Ein weiterer schaltungstechnisch bedingter genereller Nachteil der bislang verwendeten analogen Aufbauten ist die Abstimmung der Verzögerungsgeschwindigkeiten in den analogen Verzögerungsstrecken, die einer fertigungstechnisch bedingten Toleranz unterliegen.
Ein weiterer genereller Nachteil der bisher zur Signalverarbeitung und Mustererkennung überwiegend genutzten digitalen Signalprozessoren (DSP's) ist die Nichtangepaßtheit an die mit dem Verfahren und der Einrichtung angegebene Lösung für die vorliegende Problemstellung. Ein DSP kann die gegebene Problemstellung definierter Groesse nicht in der gleichen Zeit wie das vorgestellte Verfahren und die vorgestellte Einrichtung lösen. Die DSP Architektur kann die Signaldatenstroeme nicht nach dem Verfahren und wie die Einrichtung verarbeiten.

Ein weiterer genereller Nachteil der DSP's ist die zentrale Steuereinheit und die wenigen Rechenwerke, die die Datenströme nicht wie die Verfahrensvorgabe und die Einrichtung verarbeiten können. Bei digitalen Signalprozessoren werden jeweils in den Rechenwerken Instruktionen geladen, Operanden geholt, und Ergebnisse in Registern abgelegt. Ein digitaler Signalprozessor kann die Signalflußarchitektur der Einrichtung, bei der die Signalströme raumzeitlich durch die Einrichtung fließen, aufgrund seiner festgelegten CPU-Architektur nicht nachbilden.

### Aufgabe der Erfindung

Aufgabe der Erfindung ist daher die Schaffung eines Verfahrens und einer Einrichtung zur Detektion und Koinzidenzbringung abschnittsweise in monotone und stetige Trajektorien wandelbarer Signalformen, insbesondere zur Echtzeitmustererkennung, Ortung und Verfolgung optischer und akustischer Signale, und zur Laufzeitdifferenzenbestimmung mit erhöhter Meßgenauigkeit durch Programmierbarkeit der Schlüsselsignalformen und Programmierbarkeit der Auflösung.
Eine weitere Aufgabe ist die Beschleunigung der Berechnung, um mehrere Anwendungsfelder der Echtzeitmustererkennung zu erschließen. Aufgrund der optimalen Anpassung der Einrichtung an die speziellen Problemstellungen sind die Rechenzeiten für Probleme definierter Größe um Größenordnung geringer als die mit handelsüblichen digitalen Signalprozessoren erzielbaren Rechenzeiten.

### Beispiele

Bei der erfindungsgemäßen Verfahrensweise erfolgt zunächst die Mustererkennung und anschließend die Laufzeitdifferenzenbestimmung durch Detektion von Schlüsselsignalformen und der Weiterverarbeitung der Information in einer nachgeschalteten Multi-Koinzidenzeinheit, wobei ein shiftinvariantes paralleles Multi-Template-Matching durchgeführt wird, bei dem Schlüsselsignalformen parallel korreliert werden und in der nachgeschalteten Multi-Koinzidenzeinheit pro Zeitschritt z.B. ein Satz von Laufzeitdifferenzen ausgegeben wird.

Das Verfahren zur Mustererkennung und Laufzeitdifferenzenbestimmung abschnittsweise in monotone und stetige Raum-Zeit-Trajektorien wandelbarer Signalformen, insbesondere zur Echtzeitmustererkennung optischer und akustischer Signalformenzeichnet sich dadurch aus, daß durch Abtasten der Signale und Verarbeitung der Abtastdaten vorprogrammierbare Schlüsselsignale detektiert werden, sowie durch Multi-Koinzidenzen Signalkombinationspaare unterschiedlicher Signallaufzeitdifferenz und unterschiedlicher Signalform bestimmt werden. Die Signale werden eingangsseitig in einer Folge von Eingabevektoren abgetastet, jeder Eingabevektor durchläuft konsekutiv eine Signaldetektionseinheit bestehend aus parallelgeführten, programmierbaren Signalflußstrecken, in der durch Programmieren der Ausbreitungsgeschwindigkeiten in den Signalflußstrekken ein Schlüsselsignal an einer bestimmten Position entlang der Signalflußstrecke durch Summierung aller Teilergebnisse senkrecht dazu an den einzelnen Signalknotenpunkten angebrachter Korrelationseinheiten ein maximales Korrelationsergebnis ergibt, wobei durch Vergleich des Korrelationsergebnisses mit einem programmierbaren Schwellwert bei Überschreiten des Schwellwerts ein Detektionssignal generiert wird, wobei die Detektionssignale aller Korrelationseinheiten nachfolgend eine Multi-Koinzidenzeinheit bestehend aus jeweils paarweise antiparallel geführten Verzögerungsstrecken durchlaufen, wobei das Aufeinandertreffen zweier gegenläufiger Detektionssignale durch äquidistante Anbringung von Koinzidenzgliedern entlang der Verzögerungsstrecke eine Koinzidenz ergibt, deren jeweilige Ortsposition entlang der Verzögerungsstrecke das Vorliegen einer bestimmten Signallaufzeitdifferenz eines Signals bestimmter Form kodiert.

Die Einrichtung zur Durchführung des Verfahrens ist dadurch gekennzeichnet, daß Signale an einer Empfangsvorrichtung abgetastet werden und in eine Folge von Eingabevektoren transformiert werden, die konsekutiv in einer Signaldetektionseinheit bestehend aus programmierbaren Signalflußketten und senkrecht dazu in äquidistanten Abständen angebrachten Addierer-/Komparatoreinheiten, die jeweils den Signalzustand der Signalflußketten an einer bestimmten Position in der Signalflußkette abgreifen, verarbeitet werden, wobei die Detektion eines Signals bestimmter Form durch den Vergleich eines vorgegebenen Schwellwerts mit dem pro Zeitschritt ermittelten Korrelationsergebnis der zugewiesenen Addierer-/Komparatoreinheit bestimmt wird und bei Überschreiten des Schwellwertes ein getakteter Normpuls generiert wird, wobei die getakteten Normpulse aller Addierer-/Komparatoreinheiten eine Multi-Koinzidenzeinheit bestehend aus zwei antiparallel geführten Ketten von hintereinandergeschalteten Schieberegistern (antiparallel geführte Flip-Flop-Ketten) durchlaufen, wobei jeweils die Speicher-Flip-Flop-Ketten der Addierer-/Komparatoreinheiten, die das gleiche Signal kodieren, paarweise durch Verbindung jedes Speicher-Flip-Flop-Paares mit einem UND-Gatter längs der Speicher-Flip-Flop-Ketten zusammengefaßt sind und das Aufeinandertreffen zweier gegenläufigen Normpulse am UND-Gatterausgang einen getakteten Normpuls auslöst, der durch den gegebenen Taktzeitpunkt und die jeweilige Ortsposition des UND-Gatters längs der Speicher-Flip-Flop-Kette das Vorliegen einer bestimmten Signallaufzeitdifferenz eines Signals bestimmter Form kodiert.

### Vorteile des Verfahrens und der Vorrichtung

Ein Vorteil der erfindungsgemäßen Verfahrenslösung im Anwendungsbereich der akustischen Mustererkennung und Laufzeitdifferenzenbestimmung ist, daß die komplexe Nachbildung einer Silicon Cochlea entfällt. Die Silicon Cochlea wird durch eine Signaldetektionseinheit substituiert, deren zeitliches Antwortverhalten in Bezug auf das anliegende Eingangssignal und den gewählten Parametersatz deterministisch exakt angebbar ist.

Ein weiterer Vorteil für alle Mustererkennungsprozesse ist die Programmierbarkeit der Signaldetektionseinheit, so daß durch die Programmierung der Signalausbreitungsgeschwindigkeiten in den Signalflußketten die Detektion von Sätzen bestimmter Schlüsselsignalformen programmiert werden kann. Ein weiterer Vorteil ist, daß die Auflösung der Laufzeitdifferenzen nach erfolgter Mustererkennung durch die Intervallfestlegung der maximal registrierbaren Laufzeitdifferenz variiert werden kann. Ein weiterer Vorteil des erfindungsgemäßen Verfahrens ist, daß durch eine zeitsynchrone Taktung die Ausbreitungsgeschwindigkeiten aller Signalflußketten exakt aufeinander abgestimmt sind. Ein weiterer Vorteil ist die Adaption an die Aufgabenstellung durch Programmierung der Auflösung und damit eine erhöhte Meßgenauigkeit von Schlüsselsignalen, so daß mit Hilfe des Verfahrens der relative Abstand einer Signalquelle in Bezug auf die Empfangsvorrichtung hochauflösend bestimmt werden kann, mit Hilfe des Verfahrens in der Empfangsvorrichtungsebene der Seitenwinkel einer Signalquelle in Bezug zur Empfangsvorrichtung hochauflösend bestimmt werden kann und mit Hilfe des Verfahrens insbesondere auch Sprachsignale und Bildsignale hochauflösend detektierbar sind.
Die vorgenannten Vorteile der erhöhten Auflösung und der Möglichkeit der Adaption an spezielle Anwendungsgebiete gelten natürlich auch für andere Anwendungsgebiete des Verfahrens.
In vielen physikalischen Fällen durchläuft ein Objekt in einem Phasenraum eine charakteristische Bewegungstrajektorie. Die zurückgelegte Bewegungstrajektorie kann mit dem Verfahren und der Einrichtung detektiert werden. Da das Verfahren und die Einrichtung Trajektorien detektiert, können mit der Kenntnis der physikalischen Gegebenheit des Phasenraums relevante Parameter wie zum Beispiel Raumlage, Winkelposition, Entfernung, Geschwindigkeit, Beschleunigung etc. eines Objekts bestimmt werden. Zu den Anwendungsgebieten zählen daher insbesondere die Geschwindigkeits- und Beschleunigungsmessung und der kompensatorische Ausgleich von Auslenkbewegungen aus der Ruhelage, die taktile Mustererkennung, etc.

Aufgrund der im Vergleich zu DSP's wesentlich geringeren Bearbeitungszeit ist die Verwendung des Verfahrens und der Einrichtung auch im Bereich der Sicherheitsüberwachung schnell ablaufender Prozesse, wie der Flugzeugsicherheit oder Reaktorsicherung vorteilhaft, genauso wie zur Überwachung von Produktionsanlagen oder der Überwachung von Patienten im medizinischen Bereich.
Seine Begrenzung findet das erfindungsgemäße Verfahren und die Einrichtung erst in solchen Signalformen, die sich nicht in abschnittsweise, monotone und stetige Trajektorien oder Zeitreihen wandeln lassen.

Ein Vorteil der schaltungstechnischen Realisierung ist, daß herkömmliche digitale elektronische Schaltkreise genutzt werden und die Architektur der Schaltung hochstrukturiert ist. Sie kann in einen regulären VLSI-Chip-Entwurf überführt werden, da die Schaltung aus nur drei Grundelementen besteht, deren Verschaltung eine elementare Grundfunktionseinheit bildet, die als Grundzeile darstellbar ist. Aus deren n-facher Replikation und Übereinanderschichtung und anschließender einfacher Durchkontaktierung der Zeilen ist der VLSI-Chip zu bilden.

Die erfindungsgemäße Verfahrenslösung der Aufgabe kennzeichnet sich durch die im Patentanspruch 1-8 angegebenen Merkmale, während die entsprechende schaltungstechnische Lösung durch die in den Patentansprüchen 9-17 angegebene Merkmale bestimmt ist.
Die weiteren Patentansprüche 18-41 beziehen sich auf die technischen Bereiche und Geräte in denen das erfindungsgemäße Verfahren und die Einrichtung Verwendung finden kann.

Weitere Merkmale und Vorteile der Erfindung werden anhand der in den Zeichnungen dargestellten Ausführungsbeispiele dargestellt.

Hierin zeigt:
Fig. 1: Darstellung der Umwandlungschritte zum benötigten Eingabevektor für einen einzelnen Signalempfänger (Mikrophon).
Fig. 2: Darstellung der Umwandlungschritte zur parallelen Signaldatenverarbeitung durch eine Mehrfachempfangseinheit, die die Signalauflösung erhöht.
Fig. 3: Blockschaltbild der Signalvorverarbeitungsstufen und der Einrichtung, exemplarisch für die Bestimmung von Laufzeitdifferenzen akustischer Signalen.
Fig. 4: Struktur der Einrichtung zur Bestimmung von Laufzeitdifferenzen von beispielsweise akustischen Signalen.
Fig. 5: Generierung einer Trajektorie durch eine zeitliche Abfolge von Shiftsequenzen.
Fig. 6: Zeitliche Ablaufdarstellung der Verarbeitung in der Signaldetektioneinheit in Einzelschritten.
Fig. 7: Schaltungstechnische VLSI-Realisierung der Einrichtung.

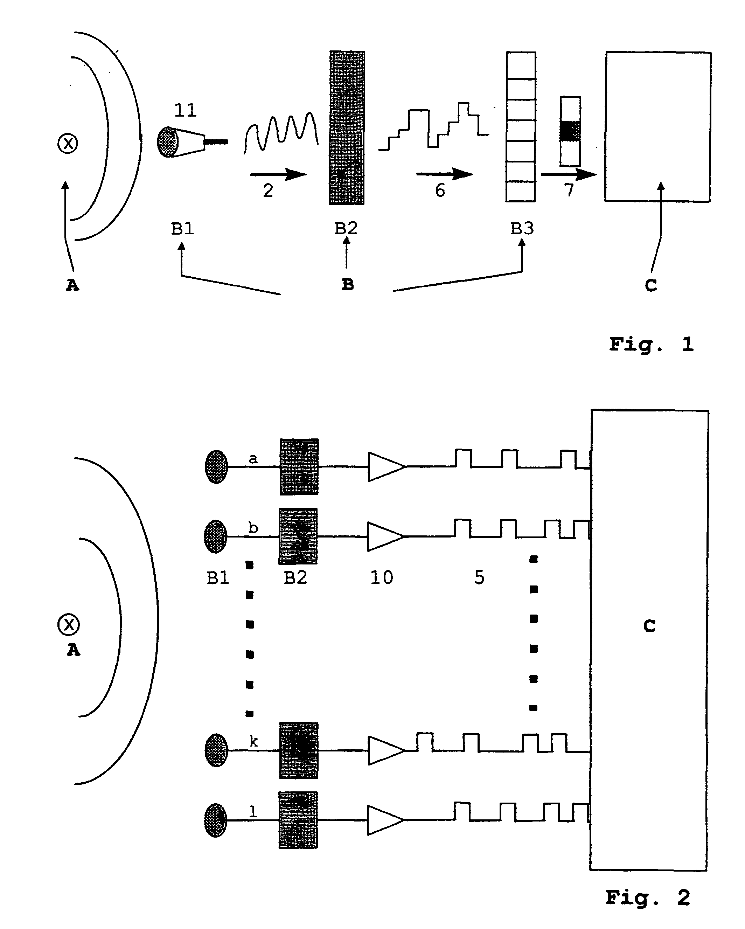

Nach Fig.1 sind die prinzipiellen Schritte der Signalumwandlung mit dem erfindungsgemäßen Verfahren und der Einrichtung gegeben. Das Signal einer Signalquelle A wird in der Signavorverarbeitungsstufe B durch den Signalwandler B1, den A/D Wandler B2 und den Eingabevektorgenerator B3 für den Chip C, bestehend aus Signaldetektionseinheit C1 und Multikoinzidenzeinheit C2, aufbereitet. Der Signalwandler B1 kann z.B. wie hier abgebildet aus einem Mikrophon 10 bestehen.
Das ursprünglich von einer z.B. optischen oder akustischen Signalquelle A emittierte Signal wird von einem opto- bzw. elektromechanischem Signalwandler B1 in eine elektrische Stromkurve bzw. Spannungskurve transformiert, das Analogsignal 2 vom nachgeschalteten A/D Wandler B2 in die diskreten Digitalwerte des Digitalsignals 6 abgetastet und im Eingabevektorgenerator B3 über eine Table-Look-Up-Tabelle der Digitalwert in eine Signalhöhe, die durch die Position im Eingabevektor 7 spezifiziert ist, überführt. Der Signaldetektionschip C1 als erstem Teil des Chips C verarbeitet pro Zeitschritt einen Eingabevektor 7 und gibt pro Zeitschritt einen Merkmalsvektor aus.

Nach Fig. 2 werden je nach Versuchsaufbau z.B. elektrische, optische oder akustische Signale von den Signalwandlern B1a,b-k, l einer Mehrfachempfangseinheit registriert. Die Signalwandler der Mehrfachempfangseinheit kann in der optischen Anwendung aus einer CCD oder einem Photodiodenarray, in der elektrischen Anwendung aus einer Vieldraht-Driftkammer und in der akustischen Anwendung aus einem Mikrophonarray oder einer Silicon Cochlea bzw. einem hydromechanischen Wandlerarray bestehen. Die Mehrfachempfangseinheit ist durch die Geometrie der Anordnung der Signalwandler B1a,b-k,l z.B. lineare Ausrichtung der Signalwandler B1 a,b-k,l in äquidistantem Abstand in einer Vieldraht-Driftkammer bzw. der Cochlea oder einem Mikrophonarray und die Ausbreitungsgeschwindigkeiten im Umgebungsmedium spezifiziert. Jeder Signalwandler B1 der Mehrfachempfangseinheit ist identisch aufgebaut und generiert einen kontinuierlichen Signaldatenstrom. Die Signaldatenströme der Sigalwandler B1 werden synchron, nach Wandlung in den A/D Wandlern B2 und nach Durchlaufen der Komparatoren 10 als Bitströme 5 an den Signaldetektionschip C1 herangeführt und in dem Signaldetektionschip C1 zur Signalanalyse herangezogen.

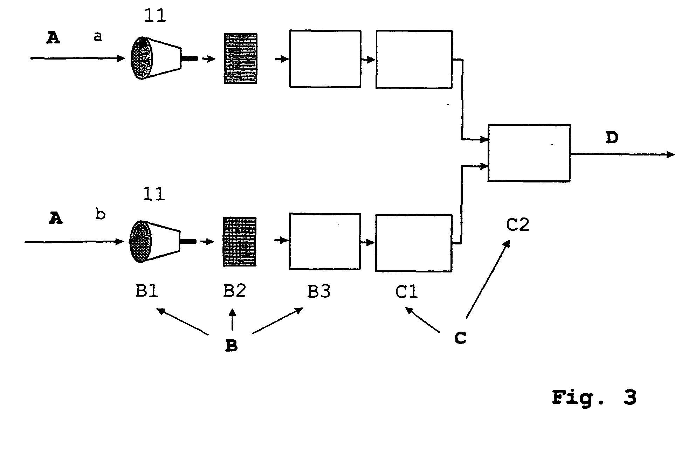

Nach Fig. 3 sind der Einrichtung zur Bestimmung von Laufzeitdifferenzen z.B. von akustischen Signalen zwei Signalvorverarbeitungsstufen Ba und Bb parallel vorgeschaltet. Die Signalvorverarbeitsstufe Ba mit dem Mikrophon 11a ist dabei der oberen Signaldetektionseinheit C1a und die Signalvorverarbeitsstufe Bb mit dem Mikrophon 11b ist dabei der unteren Signaldetektionseinheit C1b vorgeschaltet. Beide Vorverarbeitungsstufen Ba und Bb und beide Signaldetektionseinheiten C1a und C1b sind identisch aufgebaut. Beide Verarbeitungsstränge werden in der Multikoinzidenzschaltung C2 zusammengeführt, die pro Zeitschritt einen Ausgabevektor D, hier der Signallaufzeitdifferenzen ausgibt. Die Schallwandler (Mikrophone etc.) wandeln den von einer Signalquelle A, hier einem Schallgeber an den Signalwandlern B1a und B1b erzeugten Schalldruck in elektrische Analogsignale um. Die nachgeschalteten A/D-Wandler B2a und B2b tasten die elektrischen Signale zeitdiskret ab und generieren je eine Folge von Digitalwerten, die das Signal beschreiben. Die Eingabevektorgeneratoren B3a und B3b wandeln die Folgen von Digitalwerten in je eine Folge von Eingabevektoren 7 um. Dabei erfolgt eine Normierung des Signals, die nach dem zu erwartetenden Maximalbereich des Signals vorgenommen wird. Das Signal wird in feste Quantifizierungsstufen unterteilt, deren Zahl durch die Breite des Eingabevektors 7, die als Zahl der Vektorelemente definiert ist, gegeben ist. Die Breite jeder Quantifizierungsstufe ist durch die Normierung, die Zahl der Vektorelemente und die Art der Unterteilung (linear, logarithmisch etc.) gegeben. Die Einrichtung C erhält eingangsseitig pro Zeitschritt zwei Eingabevektoren 7a und 7b, einen in der oberen Signaldetektionseinheit C1a und einen in der unterern Signaldetektionseinheit C1b. Die Eingabevektoren 7a und 7b werden in den Signaldetektionseinheit C1a und C1b und in der nachgeschalteten Koinzidenzeinheit C2 raum-zeitlich parallel verarbeitet. Die Einrichtung gibt pro Zeitschritt Sätze von Laufzeitdifferenzen unterschiedlicher Signalformen aus. Die Anzahl der Sätze von Laufzeitdifferenzen hängt von der vorgegebenen Zahl der programmierten Referenzsignalmuster ab. Die Zahl der pro Zeiteinheit ausgebbaren Laufzeitdifferenzen pro antiparallel geführten Flip-Flop Kettenpaar in der Koinzidenzeinheit C2 ist durch die Länge einer Flip-Flop-Kette, die durch die Anzahl der Flip-Flops definiert ist, aus denen eine Flip-Flop-Kette besteht, gegeben. Die Ausgabe von 10 Laufzeitdifferenzen pro Signalform erfordert eine Flip-Flop-Kette der Länge 10. Die Intervallänge der Laufzeitdifferenzen ist durch die vorgegebene maximale Laufzeitdifferenz gegeben. Die lineare Unterteilung des Laufzeitdifferenzenintervalls ist durch die Länge einer Flip-Flop-Kette gegeben. Signallaufzeitdifferenzen ergeben sich durch die Geometrie der Schallwandleranordnung der Empfangsvorrichtung. Das Signal wird je nach Lage des Schallgebers in Bezug zur Empfangsvorrichtung zu verschiedenen Signalankunftszeiten an Signalwandler 11a bzw. 11b registriert. Durch geeignete Anordnung mehrerer Einrichtungen kann aus den sich ergebenden Signallaufzeitdifferenzen, der Geometrie der Empfangsvorrichtung und der Schallausbreitungsgeschwindigkeit im schallgebenden Medium die relative Raumlage eines Schallgebers in Bezug zur Empfangsvorrichtung berechnet werden. Je nach Aufbau der einzelnen Empfangsvorrichtung werden Kenngrößen wie rel. Radialabstand Schallgeber-Empfangsvorrichtung, Höhen- und Seitenwinkel des Schallgebers in Bezug auf die Empfangsvorrichtung berechnet. Die Raumlage des Schallgebers in Bezug auf die Empfangsvorrichtung ist durch den relativen Radialabstand r des Senders in Bezug zur Empfangsvorrichtung, den Höhenwinkel alpha (Vertikalwinkel in Bezug zur Empfangsvorrichtung) und den Seitenwinkel beta (Horizontalwinkel in Bezug zur Empfangsvorrichtung) gegeben.

Die Relativkoordinaten (r, alpha, beta) des Schallgeber-Empfangsvorrichtungsbezugsystems werden jeweils von einer separaten Einrichtung ermittelt. Exemplarisch dargestellt wird, wie aus den Signallaufzeitdifferenzen der Seitenwinkel (Horizontalwinkel zwischen Empfängerachse und Schallgeber) als Kenngröße ermittelt wird. Der Seitenwinkel wird mit hoher Auflösung bestimmt, da Signallaufzeitdifferenzen von der Einrichtung mit hoher Auflösung bestimmt werden. Die Seitenwinkelbestimmungsvorrichtung besteht aus zwei in definiertem Abstand angebrachten Schallwandlereinheiten. Die Verbindungslinie der beiden Schallwandlereinheiten legt die Empfangsachse der Empfangsvorrichtung fest. Die Seitenwinkelbestimmungsvorrichtung detektiert die Ankunft des Signals an Signalwandler 11a und die zeitverzögerte Ankunft des Signals an Signalwandler 11b bestimmt die Laufzeitdifferenz zwischen der Ankunftszeit des Signals an Signalwandler 11a und des Signals an Signalwandler 11b und leitet aus der Laufzeitdifferenz den horizontalen Winkel in der Empfangsvorrichtungsebene zum Schallgeber als Kenngröße ab, da der Seitenwinkel eine eindeutige Funktion der Signallaufzeitdifferenz ist.

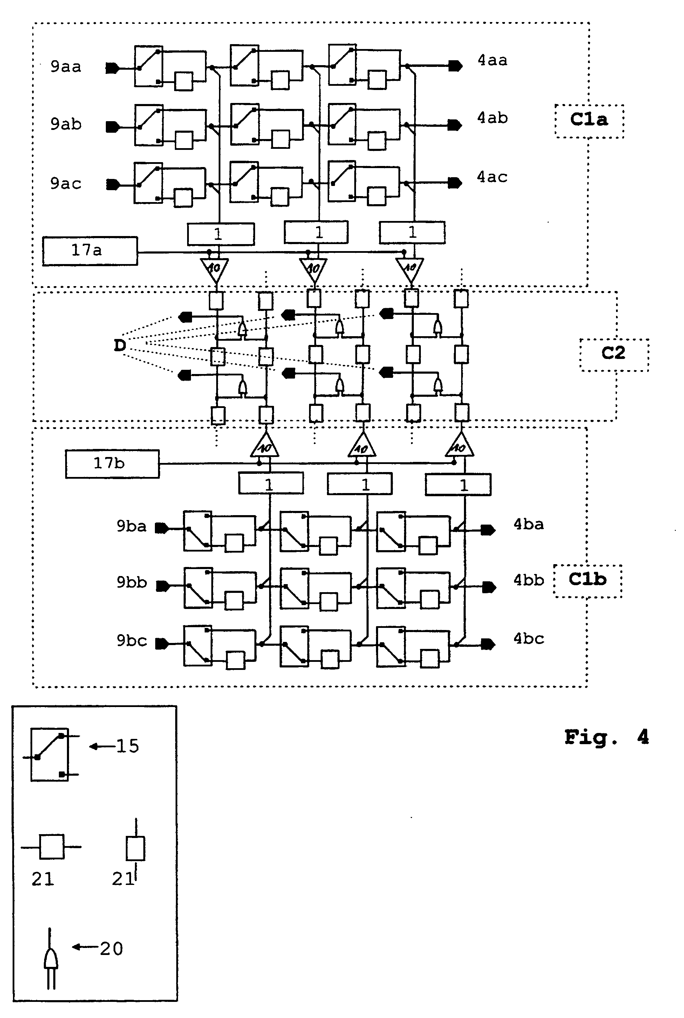

Nach Fig. 4 ist an einem exemplarischen Aufbau die Struktur der Einrichtung bestehend aus zwei Signaldetektionseinheiten C1 und der nachgeschalteten Multi-Koinzidenzeinheit C2 gegeben. Jede der Signaldetektionseinheiten C1a und C1b bestehen aus drei Grundkomponenten: einer Schalt-/Verzögerungszelle gebildet aus einem programmierbaren Schalter 15 und einem Verzögerungsglied 21, einem Addierer 1 und einem Komparator 10. Nach Fig. 4 besteht die Signaldetektionseinheit aus einer elementaren Grundstruktur, die zeilenweise identisch durch Nebeneinanderreihung von Schalt-/Verzögerungszellen und der Addierer-Komparatoreinheit gebildet wird. Die Signaldetektionseinheit wird durch Schichtung identischer Replika der gleichen Grundzeile aufgebaut.
Die obere Signaldetektionseinheit C1a in Fig. 4 besteht aus drei dieser Grundzeilen. Die linke dieser drei Grundzeilen besteht aus den drei Schalt-/Verzögerungszellen, die direkt in Kontakt mit den Eingangskanälen 9aa,9ab,9ac stehen und aus dem oberen, linken Addierer 1 und Komparator 10.
Jede Schalt-/Verzögerungszelle hat einen Eingang und einen Ausgang. Die Schalt-/Verzögerungszellen sind jeweils hintereinandergeschaltet und bilden eine Signalflußkette. Durch die Weiterleitung des Signalflusses auf einen Ausgang und den eingangsseitigen Anschluß können mehrere Signaldetektionseinheiten miteinander verknüpft werden und die verbundenen Signalflußketten unterbrechungsfrei die Signalflüsse weiterleiten. In Fig. 4 wurden z.B. in der oberen Signaldetektionseinheit C1a jeweils drei Schalt-/Verzögerungszellen hintereinandergeschaltet und diese bilden die Signalflußketten 9aa-4aa, 9ab-4ab und 9ac-4ac.
Die Schalterstellung innerhalb der Schalt-/Verzögerungszelle wird durch ein zugewiesenes Speicherelement, ein Flip-Flop programmiert. Die Programmierung des Flip-Flops eines Schalters und damit die Signaldetektionseinheit kann bei der Initialisierung des Chips, aber auch während einer Unterbrechung des Betriebes erfolgen. Die Signaldetektionseinheiten sind also rekonfigurierbar, und vor Ort programmierbar, während kurzen Betriebspausen der Dauer einiger Taktzyklen.
Je nach Stellung des Schalters wird ein einkommendes Signal auf den oberen Signallaufpfad (Schalterstellung Ein) oder den unteren Signallaufpfad (Schalterstellung Aus) verzweigt. Im oberen Signallaufpfad wird das Signal direkt vom Eingang der Schalt-/Verzögerungszelle zum Ausgang weitergeleitet. Im unteren Signallaufpfad liegt das Signal an dem Verzögerungsglied an. Der obere Signallaufpfad und der untere Signallaufpfad werden am Ausgang der Schalt-/Verzögerungszelle wieder zusammengeführt. Der Abschnitt eines Signallaufpfads nimmt die Zustände logisch 0 (kein Signal vorhanden) oder logisch 1 (Signal liegt vor) an. Der Addierer 1 hat n Eingänge, hier 3, wobei ein Addiereingang jeweils mit einem Signalknotenpunkt zwischen zwei Schalt-/Verzögerungszellen verbunden ist. Der Addierer zählt die Zahl der logischen Einsen, die an den Eingängen vorliegen. Die Summe wird als n-Bit Wert ausgegeben. Der Ausgang des Addierers 1 ist mit einem der Eingänge des Komparators 10 verbunden. Am zweiten Eingang des Komparators 10 liegt ein vorgegebener Schwellwert 17 zum Vergleich an. Der Komparator 10 vergleicht den Ausgabewert des Addierers 1 mit einem vorgegebenen Schwellwert 17 und gibt eine logische 1 aus, wenn der Wert des Addierers 1 größer als der Schwellwert 17 ist, andernfalls eine Null. Der Komparatorausgang bildet den Eingang zur Koinzidenzeinheit C2.

Die Signaldetektionseinheit wird funktional vom einem Satz parallel ausgerichteter Signalflußketten und dem Satz senkrecht dazu angebrachter Addierer-/Komparatoreinheiten gebildet. Die Signalflußketten und die Addierer-/Komparatoreinheiten bilden eine matrixförmige Struktur von n Signalflußketten mal m Addierer-/Komparatoreinheiten. Jede Signalflußkette wird eingangsseitig von einem hereinkommenden Normpuls aktiviert und erzeugt einen bestimmten Signalfluß, der durch die Stellung der Schalter in der Signalflußkette programmiert ist. Der Signalfluß wird als Folge von Signalshiftsequenzen angegeben. Eine Shiftsequenz ist der Signalpfadabschnitt, in dem das Signal pro Zeitschritt zugleich aktiv (logisch 1) ist. Die Folge der Shiftsequenzen ist durch die Angabe der Schalterstellungen in den Schalt-/Verzögerungszellen gegeben und ist durch die Variation der Schalterstellungen frei und im Betrieb rekonfigurierbar programmierbar. Eine Vielzahl von Shiftsequenzen kann programmiert werden. Der Shiftsequenzen reichen von der maximalen Shiftsequenz Max (abhängig von der Länge der Signalflußkette, gegeben durch die Anzahl der Schalt-/Verzögerungszellen), wobei alle Schalter auf Ein gelegt sind, bis zur minimalen Shiftsequenz 1, wobei zwei benachbarte Schalter auf Aus gestellt sind.

Das shiftinvariante Multi-Template-Matching wird von der Signaldetektionseinheit durch raum-zeitliche Korrelation nach einer festen Transformationsvorschrift ausgeführt, die spezifiziert, zu welchem Zeitpunkt an welcher Stelle ein gesetztes Pixel im Eingabevektor 7 an die Addierer-/Komparatoreinheiten herangeführt wird.
Die Transformationsvorschrift besagt, daß jedes gesetzte Pixel im Eingabevektor 7 eine bestimmte Trajektorie im Korrelationsraum durchläuft. Die Berechnung der Trajektorien ist durch die Transformationsvorschrift gegeben. Die Trajektorien werden nach der Transformationsvorschrift in Abhängigkeit vom geometrischen Aufbau der Empfangsvorrichtung, der Schallausbreitung im Medium und des maximalen Laufzeitintervalls und der Intervallunterteilung in einem zeitdiskreten Raster berechnet. Das Raster ist durch das Abtastintervall, die Breite des Eingabevektors 7 und die Zahl der Addierer-/Komparatoreinheiten gegeben. Das Ergebnis der Berechnung ist die Bestimmung der Shiftsequenzfolgen für alle Signalflußketten.

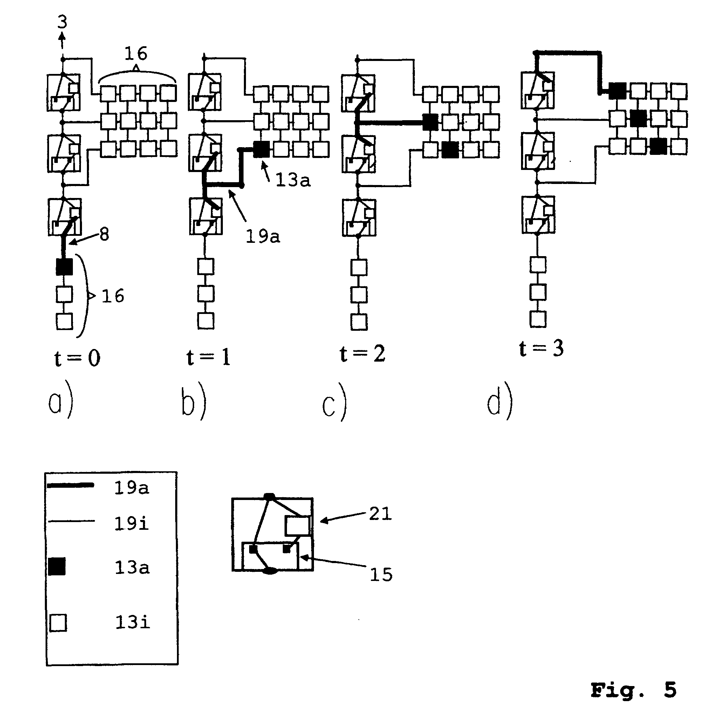

Nach Fig. 5 ist die raumzeitliche Generierung einer Trajektorie, einer Geraden mit der Steigung 45 Grad, beim Durchlaufen einer Signalflußkette, zwischen Eingang 8 und Ausgang 3, mit der Shiftsequenzfolge (1, 1, 1, ..., 1) bzw. Schalterstellung (Aus, Aus, Aus, ..., Aus)gegeben. Das Signal pflanzt sich pro Zeitschritt um eine Shiftsequenz fort. Der Zustand jedes Signalpfadabschnittes wird an den Signalknotenpunkten von den Addierereingängen registriert. Zum Zeitpunkt t = 0 liegt das Signal am Eingang 8 an. Die davorliegende Registerzelle 12 ist aktiv 13a. Zum Zeitpunkt t = 1 und t = 2 durchläuft das Signal die Signalflußkette und zum Zeitpunkt t = 3 hat das Signal die Signalflußkette vollständig durchwandert. Eine Trajektorie ist durch die Angabe ihrer Shiftsequenzfolge bzw. äquivalent dazu durch die Angabe der Schalterstellungen in der Signalflußkette gegeben. Durch die freie, rekonfigurierbare Programmierung der Schalter 15 in einer Signalflußkette kann eine Vielzahl von Trajektorien programmiert werden. Die Signalflußketten können alle stetigen monoton steigenden Trajektorien mit lokaler Steigung größer gleich 45 Grad generieren. Schallgeber rufen akustische Signalverläufe hervor, die abschnittsweise in einem begrenzten Zeitfenster stetig und monoton steigend sind. Jeder abschnittsweise definierte quantisierte Signalverlauf bestimmter zeitlicher Dauer, wobei die zeitliche Dauer durch die Zahl der Schalt-/Verzögerungszellen in der Signalflußkette gegeben ist, mit lokaler Steigung kleiner 45 Grad kann durch Festlegung der Shiftsequenzfolgen in der Signaldetektionseinheit C1 zur maximalen Korrelation an einem bestimmten Signaldetektor gebracht werden. Signalverläufe mit einer lokalen Steigung größer 45 Grad können durch Vortransformation, bei der die maximale Intervallänge des Zeitfensters und das Abtastintervall variiert wird und damit die Umrechnung der Signalverläufe in das zeitdiskrete Raster geändert wird, in Signalverläufe mit lokaler Steigung kleiner 45 Grad überführt werden und anschließend in die Signaldetektionseinheit eingegeben werden. Die Signaldetektionseinheit C1 zeichnet sich also dadurch aus, daß das zu detektierende Schlüsselsignal mit hoher Präzision bestimmt werden kann, da eine exakte Kopie des Schlüsselsignals in die Signalflußketten einprogrammiert ist. Die Güte der Nachweiskorrelation hängt von dem minimalen Abtastintervall des Signals und den durch die Diskretisierung bedingten statistischen Schwankungen ab. Weicht ein Signalverlauf von dem vorprogrammierten idealen Schlüsselsignalverlauf ab, ergibt sich innerhalb einer bestimmten Variationsbreite der Signalabweichung ein abgeschwächtes Korrelationsergebnis. Mit der Einrichtung C kann auch ein Satz von ähnlichen Signalverläufen einprogrammiert werden, so daß auch durch das Schallmedium verzerrte Signalverläufe (Reflexionen etc.) nachweisbar sind. Die Einrichtung C kann daher zur präzisen Seitenwinkelbestimmung genutzt werden, wobei die Winkelauflösung durch die minimale zeitliche Auflösung gegeben ist, die durch das minimale Abtastintervall spezifiziert ist. Die Einrichtung kann daher als hochauflösender Alarmgeber genutzt werden, wobei die Einrichtung einen Alarm bei Registrierung eines Schlüsselsignal mit definierter Variationsbreite auslöst. Die Einrichtung kann daher weiterhin zur präzisen Sprachlautbestimmung genutzt werden, wobei die Einrichtung einen Sprachlaut innerhalb einer bestimmten Variationsbreite detektiert.

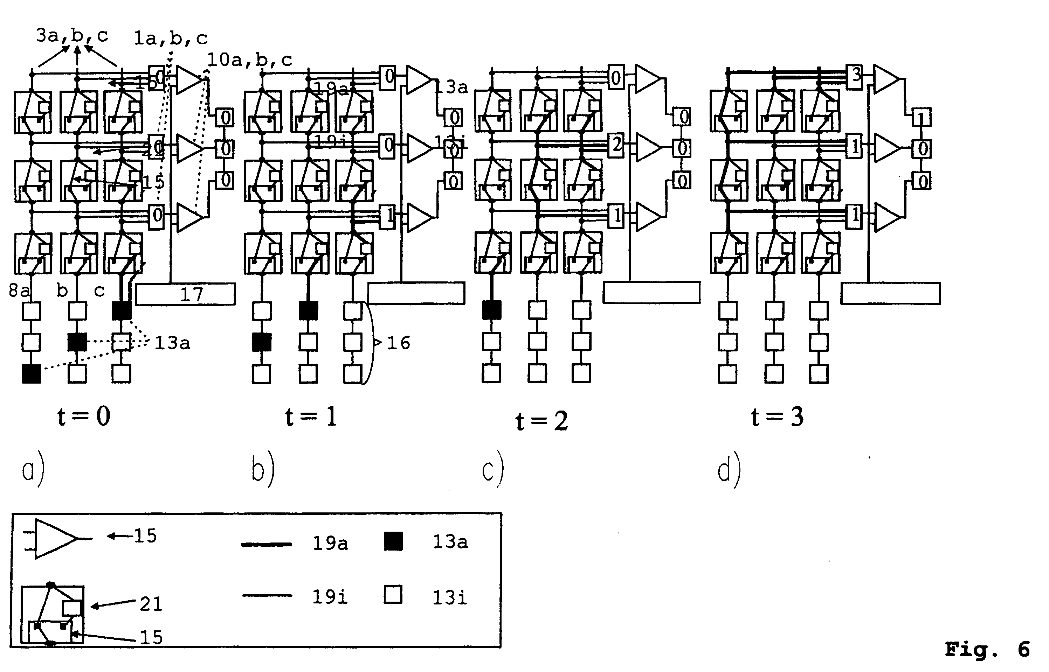

Nach Fig. 6 ist die Arbeitsweise der Signaldetektionseinheit C1 gegeben. Parallel werden n = 3 kontinuierliche Eingangsdatenströme verarbeitet, die über einen gemeinsamen Ordnungsparameter (Zeit, Winkel, Phase) synchronisiert sind. Zu jedem Zeitschritt wird ein Eingabevektor 7 eingelesen und ein Satz von Signallaufzeitdifferenzen ausgegeben.
Die Signaldetektionseinheit führt die Transformationsvorschrift aus, indem für jedes gesetzte Pixel im Eingabevektor 7 die entsprechende Trajektorie in der zugewiesenen Signalflußkette raum-zeitlich generiert wird. Im Beispiel sind drei Signalflußketten nebeneinander parallel geführt. Der dreiteilige Eingabevektor 7 liegt an den Eingängen 8a,b,c der parallel geführten Signalflußketten an. Jedes gesetzte Pixel im momentan anliegenden Eingabevektor löst die Generierung der entsprechenden Trajektorie in der zugeordneten Signalflußkette aus. Alle gesetzten Eingangspixel des Eingabevektors generieren unabhängig voneinander in ihrer Signalflußkette die entsprechenden Trajektorien. Zeitversetzt können mehrere Trajektorien in der gleichen Signalflußkette nacheinander generiert werden.
Jeder Signaldetektor greift den Signalaktivitätszustand der Signalflußketten an der gleichen Position in den Signalflußketten ab. Die Position des Addierereingangs ist durch die Angabe der Schalt-/Verzögerungszelle gegeben, hinter der jeweils der Signalaktivitätszustand abgegriffen wird. Jeder Addiereingang einer Addierer-Komparatoreinheit an einer Signalflußkette befindet sich hinter der gleichen Zahl von Schalt-/Verzögerungszellen. So liegt der Eingang des Addierers 1b hinter zwei und der des Addierers 1a hinter 3 Schalt-/Verzögerungszellen. Jede der Addierer-/Komparatoreinheiten 1a,b,c/10a,b,c summiert in jedem Zeitschritt die Signalaktivitätszustände der verbundenen Signalflußketten zu einem Ausgabewert. Dieser Ausgabewert wird in der entsprechenden Komparatoreinheit 10a,b,c mit dem vorgegebenen Schwellwert 17 verglichen und wenn der Ausgabewert größer als der Schwellwert 17 ist, als logische 1 ausgegeben. Die 1 spezifiziert, daß zu diesem Zeitpunkt ein Signal bestimmter Form detektiert wurde.
Jedes gesetzte Pixel im Eingabevektor 7 löst in der Signalflußkette eine Signalwelle bestimmter Geschwindigkeit aus. Jeder Signalverlauf löst eine Signalwellenfront am Eingang 8 aus. Die Signalflußketten werden mit unterschiedlichen Shiftgeschwindigkeiten durchlaufen. Die momentane Shiftgeschwindigkeit pro Zeiteinheit ist durch die momentane Shiftsequenz gegeben. Durch die unterschiedlichen Shiftgeschwindigkeiten in den Signalflußketten überlagern sich die Elementarwellen zu einer Wellenfront, die an einer bestimmten Position im Feld eine gerade Wellenfront bildet. Die Shiftgeschwindigkeiten sind durch die Transformationsvorschrift, die durch die Stellung der Schalterelemente in den Signalflußketten realisiert ist, so abgestimmt, daß eine vom einem gesuchten Signalverlauf ausgelöste Wellenfront in dem Feld entzerrt und am entsprechenden Signalkorrelationsort zu einer geraden Wellenfront transformiert wird. Jeder vorprogrammierte Signalverlauf wird an seinem vorbestimmten Korrelationsort zu einer geraden Wellenfront verbogen. Durch die Einstellung der Schalt-/Verzögerungszellen erfolgt eine feste Signalkorrelationsortskodierung. An einem bestimmten Korrelationsort ergibt sich gerade dann ein maximales Korrelationssignal, wenn ein bestimmtes Eingangssignal gerade in der richtigen zeitlichen Abfolge eingetroffen ist. Die Berechnung des Korrelationsorts erfolgt durch die Berechnung und Abstimmung der Shiftgeschwindigkeiten, die durch die Programmierung der Schalter 21 in den Schalt-/Verzögerungszellen einprogrammiert werden.

Nach Fig. 6 ist in einzelnen Abbildungssequenzen der Ablauf der raumzeitlichen Korrelation in Einzelschritten gegeben. Die Funktionsweise der Signaldetektionseinheit wird an einer 3x3 Untereinheit mit drei Signalflußketten und drei Addierer-/Komparatoreinheiten gezeigt. Nach Fig. 6a ist eine 3x3 Eingabebildmatrix bestehend aus drei Eingabevektoren 7 gegeben, die eine Gerade längs der Hauptdiagonalen enthält. In der linken Signalflußkette ist der Schalter der unteren Schalt-/Verzögerungszelle auf Aus gestellt, in der mittleren Signalflußkette sind der untere und obere Schalter auf Aus gestellt und in der rechten sind alle drei Schalter auf Aus gesetzt. Der Schwellwert des Komparators ist auf drei gesetzt. Die Ergebnisse der Addierer-/Komparatoreinheiten bilden pro Taktzyklus einen Signalvektor. Die Folge der Signalvektoren bilden den Signalraum. Nach Fig. 6a ist der Initialzustand zur Zeit t = 0 gegeben. Zu diesem Zeitpunkt liegt eingangsseitig ein Signal am Eingang der rechten Signalflußkette an. Das Signal wird in diesem Takt an dem Verzögerungsglied gestoppt. Nach Fig. 6b ist der Zustand nach der ersten Taktgenerierung zur Zeit t = 1 gegeben. Nach Fig. 6b wird der erste Signalpfadabschnitt in der rechten Signalflußkette aktiviert und über den angeschlossenen Addierereingang registriert die untere Addierer-/Komparatoreinheit eine 1. Eingangsseitig liegt an der mittleren Signalflußkette ein Signal an. Nach Fig. 6c ist der Zustand nach der zweiten Taktgenerierung gegeben. Durch die Shiftsequenz zwei in der mittleren Signalflußkette sind zwei Signalknotenpunkte zugleich aktiviert und die entsprechenden Eingänge der Addierer-/Komparatoreinheiten registrieren eine 1 an diesen Eingängen. In der rechten Signalflußkette ist die Signalwelle um eine Schalt-/Verzögerungszelle weiter gerückt. Damit liefert der Addierer 1c der unteren Zeile eine 1, der Addierer 1b der mittleren Zeile eine 2, da zwei Addiereingänge zugleich aktiviert sind. Eingangsseitig liegt an der linken Signalflußkette ein Signal an. Nach Fig. 6d ist der Zustand nach der dritten Taktgenerierung zur Zeit t = 3 gegeben. Die mittlere und rechte Signalwellen sind am Ausgang 3b,c der Signalflußkette angelangt. Durch die Shiftsequenz drei propagiert die Signalwelle der linken Signalflußkette mit einer höheren Ausbreitungsgeschwindigkeit und aktiviert zeitgleich mit den beiden anderen den oberen Addierer 1a. Der obere Addierer 1a zählt eine drei und das Ergebnis 1 am Komparatorausgang gibt somit an, daß zur Zeit t = 3 eine Gerade mit Steigung 45 Grad detektiert wurde.

Zum Verständnis der Multi-Koinzidenzeinheit wird nochmals Fig. 4 betrachtet.
Die Addierer-/Komparatoreinheiten der oberen Signaldetektionseinheit C1a geben pro Zeitschritt einen Signalvektor aus, der anzeigt, welche Signale zur Zeit t an den Eingangskanälen 9a,a-c empfangen und detektiert wurden. Die untere Signaldetektionseinheit C1b gibt aus, welche Signale zur Zeit t an an den Eingangskanälen 9b,a-c empfangen und detektiert wurden. Um die Signalaufzeitdifferenzen zwischen den Signalen an den Kanälen 9a,a-c und 9b,a-c zu bestimmen, werden die beiden generierten Signalvektorsätze miteinander korreliert, indem alle möglichen Signalvektorkombinationspaare gebildet werden und die Korrelationen durch Koinzidenzschaltung paarweise durchgeführt werden.

In der Multi-Koinzidenzeinheit C2 werden jeweils Signale der gleichen Signalform zur Koinzidenz gebracht. Zur Bildung der Signalvektorkombinationspaare wird ein Satz von antiparallelgeführten Flip-Flop-Ketten der Multi-Koinzidenzeinheit C2 genutzt. Die Multi-Koinzidenzschaltung wird durch paarweise Verknüpfung der Speicher-Flip-Flops des jeweils antiparallel geführten Flip-Flop-Kettenpaares gleicher Signalform mit UND-Gattern 20 realisiert. Der Satz von Signalvektoren der oberen Eingangskanäle 9a,a-c wird auf einer Seite der Flip-Flop-Ketten eingespeist. Der Satz von Signalvektoren der unteren Eingangskanäle 9b,a-c wird auf der anderen Seite der Flip-Flop-Ketten eingespeist. Pro Zeitschritt wird jeweils ein Signalvektor an den beidseitigen Eingängen der Flip-Flop-Ketten eingegeben. Die Signalvektoren durchlaufen die Flip-Flop-Ketten in gegenläufiger Richtung. In der Mitte der Flip-Flop-Ketten treffen die Signalvektoren erstmals aufeinander. Das UND-Gatter im mittleren Flip-Flop-Kettenpaar ergibt zur Abtastzeit t die Laufzeitdifferenz t0 - t0', zur Abtastzeit t + 1 die Laufzeitdifferenz t1 - t1', wobei t0 die erste Abtastzeit am Eingang 1 und t0' die erste Abtastzeit am Eingang 2 angibt. Zur Abtastzeit t + 1 sind die Signalvektoren um eine Flip-Flop-Kettenposition nach links beziehungsweise rechts gerückt. Zur Abtastzeit t + 1 liegen drei Koinzidenzpaare (t2 - t0', t1 - t1', t0 - t2') vor. Nach n Zeitschritten sind die n Flip-Flop-Ketten erstmals durchlaufen und n Koinzidenzen werden durchgeführt. Die Anzahl der Koinzidenzpaare ist durch die Länge der Flip-Flop-Ketten und die Zahl der Flip-Flop-Kettenpaare gegeben.

Die Einrichtung ist schaltungstechnisch mit digitalen Schaltkreisen realisierbar, wobei Signaldetektionseinheit und Multi-Koinzidenzeinheit getrennt voneinander aufbaubar sind. Die Multi-Koinzidenzeinheit kann mit herkömmlicher Elektronik geschaffen werden. Die Signaldetektionseinheit ist aufgrund der vielfachen Replikation der drei vorkommenden Grundelemente und ihrer einfachen Verbindungstopologie in einen strukturierten VLSI-Entwurf überführbar und in einem anwendungsspezifischen integrierten Schaltkreis implementierbar.

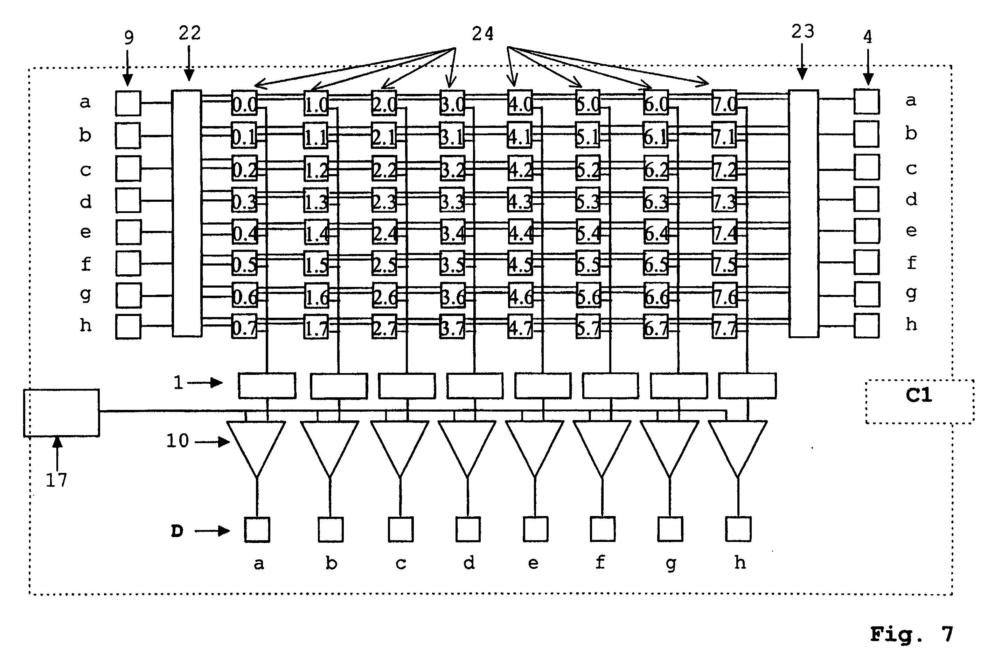

Nach Fig. 7 ist exemplarisch der Blockschaltplan einer Signaldetektionseinheit C1 mit 8 Eingangskanälen 9a-h, 8 Schalt-/Verzögerungsketten (horizontale Verbindungen zwischen 9a-h und 4a-h) bestehend aus jeweils 8 Schalt-/Verzögerungszellen 24, 8 Ausgangskanälen 4a-h und 8 Addierer-/Komparatoreinheiten die einen 8-teiligen Ausgabevektor D ausgeben.
Als vorteilhafte Ausgestaltung der Einrichtung und des Verfahren enthält der Prozessor am Eingang einen Demultiplexer 22, so daß entweder Signaldaten oder die Bitfolgen zur Programmierung der Schalterstellungen geladen werden können. Der Multiplexer 23 am rechten Ausgang gibt ebenfalls entweder Signaldaten oder die Bitfolgen weiter. Der Prozessor besteht aus zwei funktionellen Bestandteilen: die 8 parallel ausgerichteten Signalflußketten und die 8 senkrecht dazu plazierten Addierer-/Komparatoreinheiten. Die Verknüpfung der n Signalflußketten und der m Addierer-/Komparatoreinheiten bilden eine Matrix mit n Zeilen und m Spalten. Die Topologie des Prozessors ist zeilenförmig. Der Prozessor kann daher schaltungstechnisch aus mehreren identischen Replika der gleichen Grundzeile aufgebaut werden. Jede Zeile besteht aus einer Addierer-Komparatoreinheit mit 8 Eingängen und 8 setzbaren Schalt-/Verzögerungszellen 24 mit ihren zugewiesenen Speicher-Flip-Flops, um jede Schalt-/Verzögerungszelle 24 zu programmieren. Die Signalflußketten werden gebildet, indem die Signallaufpfade der Schalt-/Verzögerungszellen der aufeinanderfoldgenden Zeilen miteinander durchkontaktiert werden. Die Speicher-Flip-Flops der Schalter 15 sind jeweils pro Signalflußkette hintereinandergeschaltet und bilden eine ladbare Flip-Flop-Kette. Bei Initialisierung des Chips werden die 8 Flip-Flop Ketten in 8 Takten durch bitseriellen Shift der vorprogrammierten Bitfolgen, die die Schalterstellungen spezifizieren, parallel geladen.
Der Addierer 1 zählt alle gesetzten Signalausgänge einer Zeile zusammen und leitet das Ergebnis an den angeschlossenen Komparator 10 weiter oder direkt auf den Ausgang weiter. Die Verzweigung ist durch einen vorgeschalteten Demultiplexer 22 programmierbar. Wird das Ergebnis an den Komparatoreingang gelegt, wird das Ergebnis am Komparatoreingang mit einem programmierten Schwellwert 17, der am zweiten Komparatoreingang anliegt, verglichen. Die Komparatorausgänge geben pro Zeitschritt einen Signalvektor der Länge 8 aus.
Eine weitere vorteilhafte Ausgestaltung der erfindungsgemäßen Einrichtung und des erfindungsgemäßen Verfahrens ergibt sich dadurch, daß die Signalflußketten multichip kaskadiert werden können. Der Signalraum ist durch Hinzufügen weiterer Chips, die weitere Addierer-/Komparatoreinheiten enthalten, skalierbar.

Wird nur ein Chip C verwendet können im Betrieb durch zeitlich aufeinanderfolgendes Umschalten von Laden von Mustern und Erkennen der zuletzt geladenen Muster im zeitlichen Wechsel auch Muster verschiedener Signalformen zeitlich nacheinander erkannt werden. So z.B. Laden von akustischen Muster und Erkennen dieser Muster und darauf folgend Laden von optischen Mustern und erkennen der optischen Muster.
Werden mehrere Chips oder Systeme aufgebaut können zeitgleich genau soviele verschiedene Signalarten erkannt werden, wie Chips aufgebaut sind. Sollen optische und gleichzeitig akustische Muster erkannt werden, so sind zwei Chips erforderlich. Somit kann in vorteilhafter Ausgestaltung des erfindungsgemäßen Verfahrens und der Einrichtung auch das gleichzeitige Vorliegen eines kombinierten Bild-Ton-Musters bestehend aus einem akustischen und optischen Muster detektiert werden.

### Bezugszeichenliste

- Signalquelle: **A**
- Signalvorverarbeitungsstufe: **B**
- Signalwandler: B1
- A/D Wandler: B2
- Eingabevektorgenerator: B3
- Chip: **C**
- Signaldetektionseinheit: C1
- Multikoinzidenzeinheit: C2
- Ausgabevektor: **D**

- Addierer: 1
- Analogsignal: 2
- Ausgang: 3
- Ausgangskanal: 4
- Bitstrom: 5
- Digitalsignal: 6
- Eingabevektor: 7
- Eingang: 8
- Eingangskanal: 9
- Komparator: 10
- Mikrophon: 11
- Registerzelle (Flip-Flop-Kette): 12
- Registerzelle aktiv/inaktiv: 13a/i
- Schallwandler: 14
- Programmierbarer Schalter: 15
- Schieberegister: 16
- Schwellwert: 17
- Signal: 18
- Signal aktiv/inaktiv: 19a/i
- UND-Gatter: 20
- Verzögerungsglied: 21
- Demultiplexer (DMUX): 22
- Multiplexer (MUX): 23
- Schalter-/Verzögerungszelle: 24

### Anhängende Zeichnungen

Anzahl Anhängende Zeichnungen:
Sieben anhängende Zeichnungen auf sechs Blättern

## Patentansprüche

1. Verfahren zur Detektion und Koinzidenzbringung abschnittsweise in monotone und stetige Trajektorien wandelbarer Signalformen, insbesondere zur Echtzeitmustererkennung, Ortung und Verfolgung optischer und akustischer Signale und zur Laufzeitdifferenzenbestimmung, bei welchem durch Abtasten der Signale und Korrelation der Abtastdaten vorprogrammierbare Schlüsselsignale detektiert werden, sowie durch Koinzidenz der detektierten Signale Signalkombinationspaare bestimmter Signallaufzeitdifferenz bestimmt werden, **dadurch gekennzeichnet,**
a) daß die Signale eingangsseitig in einer Folge von Eingabevektoren (7) abgetastet werden,
b) daß jeder Eingabevektor (7) konsekutiv eine Signaldetektionseinheit (C1) durchläuft,
c) wobei die Signaldetektionseinheit (C1) aus parallel geführten, programmierbaren Signalflußketten besteht, welche hintereinander geschaltete Schalt-Nerzögerungseinheiten (15, 21, 24) aufweisen mit in äquidistanten Abständen längs der Signalflußketten in Signalknotenpunkten angebrachten, senkrecht zu den Signalflußketten ausgerichteten Addierer-/Komparatoreinheiten (1, 10),
d) daß in jeder Signaldetektionseinheit (C1) durch Vorgabe der Ausbreitungsgeschwindigkeiten in den Signalflußketten ein Schlüsselsignal an einer bestimmten Position entlang der Signalflußketten senkrecht zur Ausbreitungsrichtung maximal korreliert,
e) daß die Korrelation durch Summierung der Zustände der Signalknotenpunkte an den Addierer-/Komparatoreinheiten (1, 10) bestimmt wird,
f) wobei jede Addierer-/Komparatoreinheiten (1, 10) aus einem Addierer (1), einem Komparator (10) und einem Verzögerungsglied (21) besteht,
g) daß das Korrelationsergebnis von dem Komparator (10) mit einem programmierbaren Schwellwert (17) verglichen wird,
h) daß bei Überschreiten des Schwellwerts (17) ein Normpuls generiert wird,
i) daß die Normpulse aller Addierer-/Komparatoreinheiten (1, 10) nachfolgend eine Multi-Koinzidenzeinheit (C2) durchlaufen,
j) wobei die Multi-Koinzidenzeinheit (C2) aus jeweils paarweise antiparallel geführten Verzögerungsketten besteht, und
k) daß beim Aufeinandertreffen zweier gegenläufiger Normpulse durch äquidistante Anbringung von UND-Gattem (20) entlang der Verzögerungsstrecke eine Koinzidenz erzeugt wird, deren jeweilige Ortsposition längs der Verzögerungsstrecke das Vorliegen einer Signallaufzeitdifferenz eines Signals (18) kodiert.

2. Verfahren nach Anspruch 1, **dadurch gekennzeichnet, daß** ein Satz von Laufzeitdifferenzen verschiedener Signale (18) parallel bestimmbar ist und pro Zeitschritt ein Satz von Signallaufzeitdifferenzen ausgegeben wird.

3. Verfahren nach Anspruch 1 oder 2, **dadurch gekennzeichnet, daß** ein Satz verschiedener vordefinierter Schlüsselsignale durch Programmieren von Flip-Flop-Ketten (12) programmierbar ist.

4. Verfahren nach einem der Ansprüche 1 bis 3, **dadurch gekennzeichnet, daß** die Signalausbreitungsgeschwindigkeiten in den Signalflußketten frei programmierbar sind.

5. Verfahren nach nach einem der Ansprüche 1 bis 4, **dadurch gekennzeichnet, daß** das maximale Laufzeitdifferenzenintervall und die Unterteilung des Laufzeitdifferenzenintervalls programmierbar ist.

6. Verfahren nach einem der Ansprüche 1 bis 5, **dadurch gekennzeichnet, daß** als Signale (18) wahlweise Bitströme oder die Addierergebnisse zur Nachbearbeitung in nachgeschalteten Einheiten ausgegeben werden.

7. Verfahren nach einem der Ansprüche 1 bis 6, **dadurch gekennzeichnet, daß** nach Beendigung des Betriebsmodus zur Erkennung der programmierten Signalmuster, diese durch neues Laden von Signalmustem ersetzt und anschließend die neuen Signalmuster detektiert werden.

8. Verfahren nach einem der Ansprüche 1 bis 7, **dadurch gekennzeichnet, daß** durch Multi-kaskadierung mindestens zweier erfindungsgemäßer Chips (C) eine zeitgleiche Mustererkennung verschiedenartiger Signale, wie optischer und akustischer Signale ermöglicht wird und deren Koinzidenz detektierbar ist.

9. Einrichtung zur Durchführung des Verfahrens nach einem der Ansprüche 1 bis 8,
**dadurch gekennzeichnet,**
a) daß zwei Empfangsvorrichtungen vorgesehen sind, welche einfallende akustische Signale abtasten und in Folgen von Digitalwerten umwandeln,
b) daß jeder Empfangsvorrichtung ein Vektorgenerator nachgeschaltet ist, der die Folgen von Digitalwerten in Folgen von Eingabevektoren (7) umwandelt,
c) daß jedem Vektorgenerator eine Signaldetektionseinheit (C1) nachgeschaltet ist, die aus parallel geführten, programmierbaren Signalflußketten und senkrecht dazu in äquidistanten Abständen angebrachten Addierer-/Komparatoreinheiten (1, 10) besteht, welche jeweils den Signalzustand der Signalflußketten an einem Signalknotenpunkt in der Signalflußkette abgreifen,
d) daß jeder Komparatoreinheit ein Schwellwert (17) vorgebbar ist,
e) daß bei Überschreiten des Schwellwerts (17) ein getakteter Normpuls generierbar ist, und
f) daß die Signatdetektionseinheiten in einer Multi-Koinzidenzeinheit (C2) zusammengeführt sind, welche aus zwei antiparallel geführten Schieberegisterketten besteht, wobei jeweils zwei Speicher-Flip-Flop-Ketten, die das gleiche Signal kodieren, paarweise durch Verbindung der Speicher-Flip-Flop-Paare mit einem UND-Gatter (20) derart zusammengefaßt sind, daß das Aufeinandertreffen zweier gegenläufiger Normpulse längs der Schieberegisterketten am UND-Gatter-Ausgang einen getakteten Normpuls auslöst, welcher durch den vorgegebenen Taktzeitpunkt und die jeweilige Ortsposition längs der Schieberegisterketten das Vorliegen einer Signallaufzeitdifferenz eines Signals kodiert.

10. Einrichtung nach Anspruch 9, **dadurch gekennzeichnet, daß** die Signalflußketten durch Aneinanderreihung von Replika eines Grundelements, insbesondere einer Schalt-Nerzögerungszelle (24), gebildet sind.

11. Einrichtung nach Anspruch 9 oder 10, **dadurch gekennzeichnet, daß** die Signalflußketten durch die Variation der Schalterstellungen frei programmierbar sind.

12. Einrichtung nach einem der Ansprüche 9 bis 11, **dadurch gekennzeichnet, daß** jede Schalt-Nerzögerungszelle (24) durch ein zugewiesenes Speicher-Flip-Flop programmierbar ist.

13. Einrichtung nach einem der Ansprüche 9 bis 12, **dadurch gekennzeichnet, daß** die Programmierung der Signalmuster durch Setzen der Flip-Flop-Ketten rekonfigurierbar ist.

14. Einrichtung nach einem der Ansprüche 9 bis 12, **dadurch gekennzeichnet, daß** die Programmierung der Signalmuster durch schnelles Nachladen eines Suchmustersatzes, bestehend aus einem Bündel von Signalmustem, rekonfiguherbar ist.

15. Einrichtung nach einem der Ansprüche 9 bis 14, **gekennzeichnet, durch** Multi-kaskadierung mindestens zweier erfindungsgemäßer Chips (C) und zeitgleicher Mustererkennung wenigstens zwei verschiedenartiger Signale, beispielsweise optischer und akustischer Signale.

## Claims

1. Method for detecting and bringing into coincidence signal waveforms to be segment-wise converted into monotone and continuous trajectories, in particular for real-time pattern recognition, localization and monitoring optical and acoustic signals and for determining transit-time differentials, wherein pre-programmed key signals are detected by sampling the signals and correlating the data from the sampled signals and pairs of signal combinations of given signal transit-time differentials are determined from the coincidence of the detected signals, comprising:
a) sampling the signals in a sequence of input vectors (7) at an input side,
b) each input vector consecutively passing through a signal detection unit (C1),
c) the signal detection unit (C1) consisting of parallel, programmable signal-flow chains having consecutively mounted switching/delay units (15, 21, 24) as well as adder/comparator units (1, 10) which are situated at signal nodes equidistantly along the signal-flow chains and are oriented perpendicularly to the latter,
d) controlling in each signal detections unit (C1) the speed of propagation in the signal-flow chains for maximum correlation of a key signal at a given position along the signal-flow chains perpendicularly to the direction of propagation,
e) determining the correlation by summing the states of the signal nodes at the adder/comparator units (1, 10),
f) each adder/comparator unit (1, 10) consisting of an adder (1), a comparator (10) and a delay unit (21),
g) comparing the correlation result of the comparator (10) with a programmable threshold value (17),
h) generating a standard pulse when the threshold value (17) is exceeded,
i) then passing the standard pulses of all adder/comparator units (1, 10) through a multi-coincidence unit (C2),
j) the multi-coincidence unit (C2) consisting of antiparallel arranged pairs of delay chains, and
k) generating a coincidence, when two opposite standard pulses collide, by use of AND gates (20) mounted equidistantly along the delay path, the actual location along the delay path encoding the presence of a transit-time differential of a signal (18).

2. Method according to claim 1, wherein sets of transit-time differentials of various signals (18) are determined in parallel and a set of transit-time differentials is emitted per clock cycle.

3. Method according to claim 1 or 2, wherein a set of various predetermined key signals is programmable by setting flipflop chains (12).

4. Method according to any one of claims 1 to 3, wherein the signal propagation speeds in the signal-flow chains are freely programmable.

5. Method according to any one of claims 1 to 4, wherein the maximum transit-time differential interval and a subdivision of the transit-time differential intervals are programmable.

6. Method according to any one of claims 1 to 5, wherein bit flows or adder results are selectively emitted as signals (18) for processing in follow-up units.

7. Method according to any one of claims 1 to 6, wherein after a cycle for recognizing the programmed signal patterns has ended, these are replaced by inputted new signal patterns whereupon the latter are detectable.

8. Method according to any one of claims 1 to 7, wherein simultaneous pattern recognition of different signals, such as optical and acoustic signals, and their coincidences are detectable by multi-cascading of at least two chips (C) as per the invention.

9. Device for performing the method according to any one of claims 1 to 8,
wherein
a) at least two receivers are provided for the detection of incoming acoustic signals and for conversion thereof into sequences of digital values,
b) a vector generator each is downstream of each receiver for converting the sequences of digital values into sequences of input vectors (7),
c) downstream of each vector generator, there is a signal detection unit (1) consisting of parallel arranged, programmable signal-flow chains and of adder/comparator units (1, 10) mounted perpendicularly thereto at equidistant spacings for picking up the signal states of the signal-flow chains at signal nodes therein,
d) a threshold value (17) being predeterminable for each comparator unit (10),
e) a timed standard pulse being generated when the threshold value (17) is exceeded, and
f) the signal detection units are combined in a multi-coincidence unit (C2) consisting of two antiparallel shift-register chains which include pairs of memory flipflop chains each encoding the same signal, the pairs of flipflop chains being pairwise connected with an AND gate (20) such that a time standard pulse is triggered at the AND gate terminal when two opposite standard pulses along the shift-register chains collide, the time standard pulse encoding the presence of a transit-time differential of a signal by a predetermined timing point and an actual location along the shift-register chains.

10. Device according to claim 9, wherein the signal-flow chains are formed by arrays of replicas of a basic element, in particular of a switching/delay cell (24).

11. Device according to claim 9 or claim 10, wherein the signal-flow chains are freely programmable by varying switch positions.

12. Device according to any one of claims 9 to 11, wherein each switching/delay cell (24) is programmable by an assigned memory flipflop.

13. Device according to any one of claims 9 to 12, wherein the signal pattern programming is adapted to be reconfigured by setting the flipflop chains.

14. Device according to any one of claims 9 to 13, wherein the signal pattern programming is adapted to be reconfigured by rapid reloading of a search pattern set comprising a bunch of signal patterns.

15. Device according to any one of claims 9 to 14, wherein at least two chips (C) are multi-cascaded for simultaneous pattern recognition of different signals, such as optical and acoustic signals.

## Revendications

1. Procédé pour détecter et mettre en coïncidence des formes de signal convertibles par sections en trajectoires monotones et constantes, notamment pour la reconnaissance de textures en temps réel, pour la localisation et le suivi de signaux optiques et acoustiques, et pour la détermination de différences du délai de propagation, chez lequel des signaux-clés préprogrammables sont détectés par exploration des signaux et par corrélation des données d'exploration, et chez lequel des paires de combinaisons de signaux ayant une certaine différence du délai de propagation des signaux sont déterminées par coïncidence des signaux détectés, **caractérisé par** le fait
a) qu'à l'entrée, les signaux sont explorés dans une suite de vecteurs d'entrée (7),
b) que chaque vecteur d'entrée (7) passe consécutivement par une unité de détection de signaux (C1),
c) l'unité de détection de signaux (C1) consistant en des chaînes de flux de signaux, lesquelles sont programmables et d'orientation parallèle et disposent d'unités de commutation/retardement (15, 21, 24) connectées consécutivement, avec des unités d'additionneurs/comparateurs (1, 10) disposées à des écarts équidistants le long des chaînes de flux de signaux, dans des points de jonction des signaux, avec une orientation perpendiculaire aux chaînes de flux de signaux,
d) que dans chaque unité de détection de signaux (C1), par indication des vitesses de propagation dans les chaînes de flux de signaux, un signal-clé est en corrélation maximale à une certaine position le long des chaînes de flux de signaux, perpendiculairement à la direction de propagation,
e) que la corrélation est déterminée par l'addition des états des points de jonction des signaux près des unités d'additionneurs/comparateurs (1, 10),
f) chaque unité d'additionneur/comparateur (1, 10) consistant en un additionneur (1), un comparateur (10) et un élément de retard (21),
g) que le résultat de la corrélation est comparé par le comparateur (10) avec une valeur seuil programmable (17),
h) qu'au moment du dépassement de la valeur seuil (17), une impulsion normalisée est générée,
i) que les impulsions normalisées de toutes les unités d'additionneurs /comparateurs (1, 10) passent ensuite par une unité de multicoïncidence (C2),
j) l'unité de multicoïncidence (C2) consistant en des chaînes de retardement appariées et respectivement d'orientation antiparallèle,
k) qu'au moment de la rencontre de deux impulsions normalisées de sens opposé, à cause de la disposition équidistante de portes ET (20) le long de la trajectoire de retardement, il se produit une coïncidence, dont la position locale respective le long de la trajectoire de retardement encode la présence d'une différence du délai de propagation d'un signal (18).

2. Procédé selon la revendication 1, **caractérisé par le fait qu'**une série de différences du délai de propagation de différents signaux (18) peut être déterminée parallèlement, et que par phase de temps, une série de différences du délai de propagation des signaux est émise.

3. Procédé selon la revendication 1 ou 2, **caractérisé par le fait qu'**une série de différents signaux-clés prédéfinis peut être programmée par la programmation de chaînes bascules (12).

4. Procédé selon l'une des revendications 1 à 3, **caractérisé par le fait que** les vitesses de propagation des signaux peuvent être programmées librement dans les chaînes de flux de signaux.

5. Procédé selon l'une des revendications 1 à 4, **caractérisé par le fait que** l'intervalle maximal du délai de propagation et la subdivision de l'intervalle du délai de propagation sont programmables.

6. Procédé selon l'une des revendications 1 à 5, **caractérisé par le fait que** facultativement soit des flux de bits, soit les résultats des additions sont émis en tant que signaux (18), pour un traitement ultérieur dans des unités placées en aval.

7. Procédé selon l'une des revendications 1 à 6, **caractérisé par le fait qu'**après cessation du mode de service de reconnaissance des textures programmées de signaux, ces textures sont remplacées par chargement de nouvelles textures de signaux, et qu'ensuite ces nouvelles textures de signaux sont détectées.

8. Procédé selon l'une des revendications 1 à 7, **caractérisé par le fait que** par l'agencement en multicascade d'au moins deux puces (C) conformes à l'invention, une reconnaissance isochrone de textures de signaux d'un genre différent - de signaux optiques et acoustiques par exemple - est rendue possible et permet de détecter leur coïncidence.

9. Dispositif d'application du procédé selon l'une des revendications 1 à 8, **caractérisé par** le fait
a) que l'on a prévu deux dispositifs de réception qui explorent des signaux acoustiques incidents et qui les convertissent en des suites de valeurs numériques,
b) qu'un générateur de vecteurs, qui transforme les suites de valeurs numériques en des suites de vecteurs d'entrée (7), est placé en aval de chaque dispositif de réception,
c) qu'en aval de chaque générateur de vecteurs, il se trouve une unité de détection de signaux (C1) qui consiste en des chaînes de flux de signaux programmables et d'orientation parallèle et en des unités d'additionneurs/comparateurs (1, 10) qui sont disposées à des écarts équidistants, perpendiculairement aux chaînes, et qui prélèvent respectivement l'état de signal à un point de jonction des signaux, dans la chaîne du flux de signaux,
d) qu'une valeur seuil (17) peut être assignée à chaque unité de comparateur,
e) qu'au moment du dépassement de la valeur seuil (17), une impulsion normalisée synchronisée peut être générée, et
f) que les unités de détection des signaux concourent dans une unité de multicoïncidence (C2), laquelle consiste en deux chaînes de registres à décalage d'orientation antiparallèle, alors que deux chaînes de mémoires bascules respectives, qui encodent le même signal, sont reliées par paires, par une connexion des paires de mémoires bascules à une porte ET (20), de telle manière que la rencontre de deux impulsions normalisées de sens opposé le long des chaînes de registres à décalage déclenche à la sortie de la porte ET une impulsion normalisée synchronisée, laquelle, par le moment de synchronisation prescrit et par la position locale respective le long des chaînes de registres à décalage, encode la présence d'une différence du délai de propagation d'un signal.

10. Dispositif selon la revendication 9, **caractérisé par le fait que** les chaînes de flux de signaux sont formées par un alignement de répliques d'un élément de base, notamment d'une cellule de commutation/retardement (24).

11. Dispositif selon la revendication 9 ou 10, **caractérisé par le fait que** les chaînes de flux de signaux sont programmables librement, par une variation des positions des commutateurs.

12. Dispositif selon l'une des revendications 9 à 11, **caractérisé par le fait que** chaque cellule de commutation/retardement (24) peut être programmée moyennant une mémoire bascule assignée.

13. Dispositif selon l'une des revendications 9 à 12, **caractérisé par le fait que** la programmation des textures de signaux peut être reconfigurée en activant les chaînes bascules.

14. Dispositif selon l'une des revendications 9 à 12, **caractérisé par le fait que** la programmation des textures de signaux peut être reconfigurée par un chargement rapide d'une série de textures à rechercher consistant en un faisceau de textures de signaux.

15. Dispositif selon l'une des revendications 9 à 14, **caractérisé par** l'agencement en multicascade d'au moins deux puces (C) conformes à l'invention, et par la reconnaissance isochrone d'au moins deux signaux d'un genre différent, de signaux optiques et acoustiques par exemple.
